# FASCICULE DE BREVET EUROPEEN

(11) **EP 0 956 456 B1**
(45) Date de publication et mention de la délivrance du brevet: **21.01.2009**
(21) Numéro de dépôt: 98903106.7
(22) Date de dépôt: 23.01.1998
(51) Int. Cl.: F16C 19/52

(54) **ROULEMENT ET PALIER COMPORTANT UN INSERT DE COMPENSATION THERMIQUE**
WÄLZLAGER UND LAGER MIT EINER THERMISCHEN KOMPENSATIONSEINLAGE
ROLLING AND BEARING COMPRISING A TEMPERATURE COMPENSATING INSERT

(30) Priorité: 31.01.1997 FR 9701051
(43) Date de publication de la demande: 17.11.1999
(73) Titulaire: SNR ROULEMENTS, 74010 Annecy Cédex (FR)
(72) Inventeur: NICOT, Christophe, F-74330 Epagny (FR)
(74) Mandataire: Sayettat, Julien Christian
(86) Numéro de dépôt international: PCT/FR1998/000115
(87) Numéro de publication internationale: WO 1998/034037

(56) Documents cités:
- EP-A- 0 448 239
- DE-A- 1 907 897
- DE-A- 2 131 593
- FR-A- 2 135 903
- US-A- 2 324 676
- US-A- 3 311 431

## Description

L'invention concerne un roulement et palier comportant un insert de compensation thermique, constitué par une première bague qui porte un premier chemin de roulement, une deuxième bague qui porte un deuxième chemin de roulement, une rangée de corps roulants à contact oblique disposée au contact desdits chemins de roulement et dans lequel l'insert compense une différence de dilatation et est en contact de butée sur l'une desdites bagues.

La publication EP-A-0448239 décrit un palier de roulement dont l'insert de compensation est réalisé dans un matériau à haut coefficient de dilatation thermique qui permet de compenser par exemple la différence des dilatations ou des contractions entre un arbre tournant et un carter de montage dudit palier dont les coefficients de dilatation sont différents.

La publication CH-A-318272 décrit un roulement dans lequel l'insert de compensation est coulé ou injecté dans une gorge localisée à la périphérie de la bague extérieure.

De tels montages d'inserts nécessitent des usinages préalables de la bague support et une augmentation de l'encombrement axial et/ou radial du roulement.

Les publications FR-A-2135903 et 1537570 décrivent des roulements dont les bagues sont formées en tôle qui peuvent présenter un profil creux en caisson et dont le rebord latéral sert à positionner les corps roulants.

La publication DE-A-1907897 décrit des roulements dont les bagues sont formées en tôle et qui peuvent comportées un insert en polyamide.

La publication FR-A-2135903 décrit un roulement qui comporte une bague formée à partir de deux douilles en tôle.

Selon l'invention comme defini dans la revendication 1, l'une des bagues du roulement en tôle qui assure l'appui de l'insert de compensation, possède une portée conique qui se prolonge par une extension radiale de butée axiale pour l'immobilisation radiale et axiale dudit insert, l'insert étant localisé à la périphérie de l'une des bagues et solidaire d'une armature en tôle qui possède un fond plié radialement en direction de l'axe de rotation de bague contre lequel ledit insert est en appui axial.

L'adjonction au roulement d'une bague en tôle incluant un chemin de roulement permet la réalisation économique d'un roulement comportant un insert d'interposition qui permet de compenser la dilatation thermique différentielle, à partir d'un roulement conventionnel, sans modification dimensionnelle importante du roulement ainsi réalisé. On convient de désigner ci-après cet insert par l'expression "insert de compensation thermique"

D'autres caractéristiques et avantages de l'invention apparaîtront à la lecture de la description d'exemples de réalisation du roulement et de son montage d'application à un palier en référence aux dessins annexés dans lesquels :
- la figure 1 est une coupe radiale d'un roulement à rouleaux coniques,
- la figure 2 est une coupe radiale d'un roulement à billes à contact oblique,
- les figures 3 et 4 sont des coupes radiales de deux variantes de réalisation du roulement représenté à la figure 1, qui sont conformes à l'invention
- la figure 5 représente une coupe axiale d'un palier illustrant le montage d'application d'un roulement tel que représenté à la figure 1.

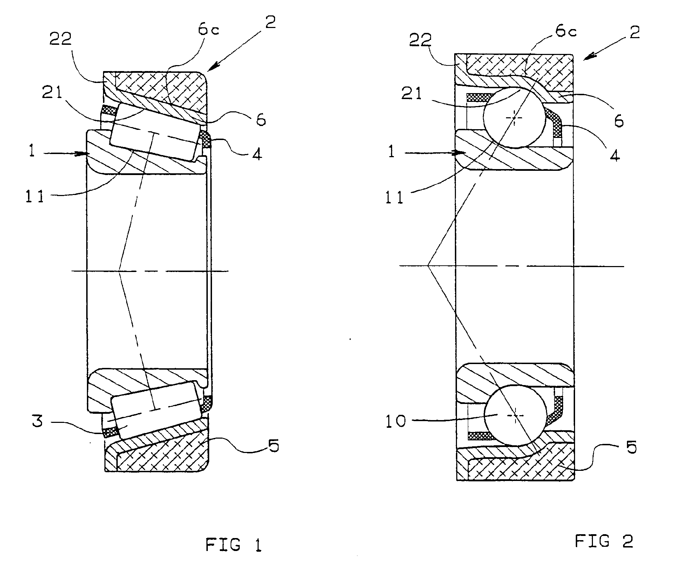

La figure 1 est une coupe radiale d'un roulement à rouleaux coniques n'étant pas conforme à l'invention et constitué par une bague intérieure 1 qui porte un premier chemin de roulement 11, une bague extérieure 2 qui porte un deuxième chemin de roulement 21, une rangée de rouleaux coniques 3 montés dans une cage 4 et disposés au contact desdits chemins de roulement 11, 21.

L'insert de compensation 5 est en contact de butée axial avec la face interne d'une extension radiale 22 de la bague 2 constituée dans le cas présent par une douille 6 ou armature de tôle sensiblement tronconique. La surface intérieure de la douille 6 constitue le chemin de roulement 21 tandis que la surface extérieure de la douille constitue la portée conique 6c que prolonge l'extension radiale 22 de butée pour l'immobilisation axiale et radiale de l'insert 5.

La figure 2 représente un roulement dans lequel une rangée de billes 10 à contact oblique roule au contact des chemins de roulement 11, 21 portés par la bague intérieure 1 et une douille 6.

Les autres éléments fonctionnels du roulement ne sont pas décrits car il sont agencés conformément aux éléments du roulement représenté à la figure 1.

Ils portent de ce fait les mêmes références.

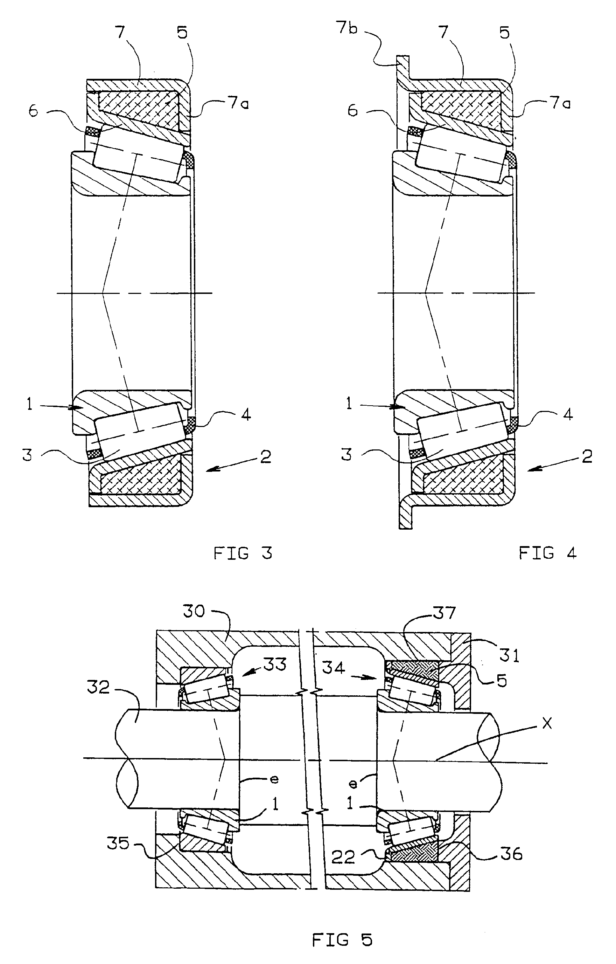

Les figures 3 et 4 représentent des variantes de réalisation du roulement représenté à la figure 1, et étant conformes à l'invention.

L'insert de compensation 5 est ici localisé dans une armature à profil creux en caisson constituée par la première douille 6 intérieure et par une douille extérieure 7 emboîtées axialement sur l'insert 5. L'insert 5 est ici solidaire de l'une et l'autre douille 6, 7.

La douille extérieure 7 possède conformément à la figure 3 un fond 7a plié radialement en direction de l'axe de rotation de la bague intérieure 2 du roulement contre lequel l'insert 5 est en appui axial. Le fond 7a est ici sensiblement localisé dans le plan de la face latérale du roulement.

La douille extérieure 7 possède conformément à la figure 4 une extension radiale 7b orientée sensiblement dans le plan d'une autre face latérale du roulement. La douille 7 possède de la sorte une section en S à branches 7a, 7b sensiblement radiales qui assurent respectivement la butée de l'insert 5 et la butée du roulement au contact d'une cloison latérale d'un carter.

La figure 5 représente la vue en coupe d'un palier incluant le montage d'application d'un roulement conforme à la figure 1.

Un carter fixe 30 est fermé par une plaque de réglage 3 1 réalisée par fonderie d'un alliage de métal léger tel qu'un alliage aluminium.

Un arbre 32, par exemple en acier, tourne dans le carter 30 et est supporté par des paliers de roulements à contact oblique 33, 34.

Les roulements 33, 34 possèdent respectivement une bague intérieure 1 frettée sur deux portées correspondantes de l'arbre 32 et sont en appui sur des épaulements e, de l'arbre 32.

Les épaulements e sont respectivement tournés vers les paliers de roulement 33, 34 axialement espacés. Les paliers 33, 34 sont respectivement montés au contact d'une paroi de butée 35 usinée dans une cloison du carter 30 et au contact d'une paroi de butée 36 portée par la plaque 31 du carter 30.

La bague extérieure 2 du roulement de palier 34 est réalisée, conformément à l'exemple représenté à la figure 1, en tôle et possède une extension radiale 22 à face de butée tournée contre l'insert de compensation thermique 5. Ce dernier est ainsi monté sur une portée sensiblement conique entre la face de butée de l'extension 22 et la paroi de butée axiale 36 portée par le carter 30.

L'insert de compensation thermique est de préférence en matériau polymère thermoplastique tel qu'un polyoxyméthylène, un polysulfure de phénylène, un polyétherimide ou un polyamide.

Mais ce matériau polymère peut également être un élastomère chargé de particules métalliques. La charge de particules métalliques procure dans ce cas à l'élastomère, des caractéristiques physiques comparables à celles d'un polymère thermoplastique.

A titre d'exemple on utilisera une matière synthétique dont le coefficient de dilatation thermique est compris entre 50.10⁻⁶ et 150.10⁻⁶ dont le module d'élasticité est inférieur à 7000. N/mm² et dont la limite élastique à la compression est supérieure à 50.N/mm².

Il est bien évident que l'insert de compensation peut être associé indifféremment à la bague extérieure ou intérieure du roulement sans sortir pour autant du cadre de l'invention.

## Revendications

1. Roulement comportant un insert de compensation thermique et dans lequel une première bague (1) porte un premier chemin de roulement (11), une deuxième bague (2) porte un deuxième chemin de roulement (21), une rangée de corps roulants (3) à contact oblique est disposée au contact desdits chemins de roulement et dans lequel l'insert de compensation (5) est en contact de butée sur l'une desdites bagues, **caractérisé par le fait que** l'une des bagues (2) en tôle du roulement et d'appui de l'insert de compensation (5), possède une portée (6c) qui se prolonge par une extension radiale (22) de butée pour l'immobilisation axiale et radiale dudit insert (5), et
**par le fait que** l'insert de compensation thermique (5) localisé à la périphérie de l'une des bagues (2) est solidaire d'une armature (7) en tôle qui possède un fond (7a) plié radialement en direction de l'axe de rotation de l'autre bague (2) contre lequel ledit insert (5) est en appui axial.

2. Roulement selon la revendication 1, **caractérisé par le fait que** l'armature en tôle (7) de l'insert (5) possède une extension radiale (7b) orientée sensiblement dans le plan d'une face latérale du roulement.

3. Roulement selon l'une quelconque des revendications 1 à 2, **caractérisé par le fait que** l'insert de compensation thermique (5) est une matière synthétique dont le coefficient de dilatation thermique est compris entre 50.10⁻⁶ et 150. 10⁻⁶ dont le module d'élasticité est inférieur à 7000.N/mm² et dont la limite élastique à la compression est supérieure à 50.N/ mm².

4. Roulement selon l'une des revendications 1 à 3, **caractérisé par le fait que** l'insert de compensation thermique est un matériau élastomère chargé de particules métalliques.

5. Roulement selon l'une des revendications 1 à 3, **caractérisé par le fait que** l'insert de compensation thermique est un matériau polymère thermoplastique tel qu'un polyoxyméthylène, polysulfure de phénylène, polyétherimide ou polyamide.

6. Roulement selon l'une des revendications 1 à 5, **caractérisé par le fait que** l'insert de compensation thermique (5) est localisé dans un profil creux en caisson constitué par deux douilles (6, 7) emboîtées, dont la douille extérieure (7) possède une section en S à branches sensiblement radiales (7a, 7b) et dont la douille intérieure (6) porte intérieurement le chemin de roulement d'une bague (2) du palier.

7. Agencement avec un roulement selon l'une quelconque des revendications 1 à 6 comportant un carter fixe (30) un arbre tournant (32) sur lequel deux épaulement 5 (e) sont respectivement tournés vers deux paliers (33, 34) axialement espacés et montés au contact d'une paroi de butée (35, 36) portée par ledit carter (10) et dans lequel les bagues intérieures (1) des roulements sont frettées sur l'arbre (32) au contact desdits épaulements (e), **caractérisé par le fait que** la bague extérieure (2) de l'un des paliers (34) est réalisée en tôle et possède une extension radiale (22) à face de butée tournée contre l'insert de compensation thermique (5) et une portée sensiblement conique de montage dudit insert (5) localisé entre la face de butée de ladite extension radiale (22) et une face de butée axiale (36) portée par le carter (30).

## Claims

1. Bearing comprising a thermal compensation insert, in which a first race (1) carries a first raceway (11), a second race (2) carries a second raceway (21), a row of oblique-contact rolling bodies (3) is disposed in contact with said raceways, and in which the compensation insert (5) is in abutment contact on one of said races, **characterised by** the fact that one of the sheet-metal races (2) of the bearing for support of the compensation insert (5) has a surface (6c) that is extended by a radial abutment extension (22) for axial and radial immobilisation of said insert (5), and by the fact that the thermal compensation insert (5) located at the periphery of one of the races (2) is fixed to a sheet-metal frame (7) that has a bottom (7a) folded radially in the direction of the rotation axis of the other race (2) against which said insert (5) is in axial abutment.

2. Bearing according to claim 1, **characterised by** the fact that the sheet-metal frame (7) of the insert (5) has a radial extension (7b) oriented substantially in the plane of a lateral face of the bearing.

3. Bearing according to either one of claims 1 to 2, **characterised by** the fact that the thermal compensation insert (5) is a synthetic material, the coefficient of thermal expansion of which is between 50.10⁻⁶ and 150.10⁻⁶, the modulus of elasticity of which is less than 7000.N/mm² and the compression elastic limit of which greater than 50.N/mm².

4. Bearing according to one of claims 1 to 3, **characterised by** the fact that the thermal compression insert is an elastic material containing metal particles.

5. Bearing according to one of claims 1 to 3, **characterised by** the fact that the thermal compensation insert is a thermoplastic polymer material such as a polyoxymethylene, phenylene polysulfide, polyetherimide or polyamide.

6. Bearing according to one of claims 1 to 5, **characterised by** the fact that the thermal compensation insert (5) is located in a hollow box-type profile consisting of two nested sleeves (6, 7), the external sleeve (7) of which has an S-shaped cross section with substantially radial arms (7a, 7b) and the internal sleeve (6) of which carries infernally the raceway of a race (2) of the bearing.

7. Arrangement with a bearing according to any one of claims 1 to 6, comprising a fixed casing (30), a rotating shaft (32) on which two shoulders (e) are respectively turned towards two bearing housings (33, 34) axially spaced apart and mounted in contact with an abutment wall (35, 36) carried by said casing (10) and in which the internal races (1) of the bearings are shrunk onto the shaft (32) in contact with said shoulders (e), **characterised by** the fact that the external race (2) of one of the bearing housings (34) is produced from sheet metal and has a radial extension (22) with an abutment face turned against the thermal compensation insert (5) and a substantially conical surface for mounting said insert (5) located between the abutment face of said radial extension (22) and an axial abutment face (36) carried by the casing (30).

## Patentansprüche

1. Wälzlager umfassend einen Einsatz zur Temperaturkompensation, wobei ein erster Ring (1) eine erste Laufbahn (11) trägt, ein zweiter Ring (2) eine zweite Laufbahn (21) trägt, eine Reihe Wälzkörper (3) mit schrägem Kontakt in Kontakt mit den Laufbahnen angeordnet ist und wobei der Kompensationseinsatz (5) in Anschlagkontakt mit einem der Ringe ist, **dadurch gekennzeichnet, dass** einer der Blechring (2) des Wälzlagers und zur Auflage des Kompensationseinsatzes (5) eine Tragfläche (6c) aufweist, die sich in einer radialen Anschlagverlängerung (22) zum axialen und radialen Blockieren des Einsatzes (5) verlängert, und **dadurch**, dass sich der Einsatz zur Temperaturkompensation (5), der sich am Rand eines der Ringe (2) befindet, fest mit einer Blecharmierung (7) verbunden ist, die einen Boden (7a) aufweist, der radial in die Richtung der Rotationsachse des anderen Ringes (2) umgebogen ist und gegen den sich der Einsatz (5) axial stützt.

2. Wälzlager nach Anspruch 1, **dadurch gekennzeichnet, dass** die Blecharmierung (7) des Einsatzes (5) eine radiale Verlängerung (7b) aufweist, die im Wesentlichen in der Ebene einer Seitenfläche des Wälzlagers ausgerichtet ist.

3. Wälzlager nach einem der Ansprüche 1 bis 2, **dadurch gekennzeichnet, dass** der Einsatz zur Temperaturkompensation (5) aus einem synthetischen Material hergestellt ist, dessen Wärmeausdehnungskoeffizient zwischen 50.10⁻⁶ und 150.10⁻⁶ beträgt, dessen Elastizitätsmodul niedriger als 7000.N/mm² ist und dessen Quetschgrenze bei über 50.N/mm² liegt.

4. Wälzlager nach einem der Ansprüche 1 bis 3, **dadurch gekennzeichnet, dass** der Einsatz zur Temperaturkompensation ein mit Metallpartikel angereichertes Elastomermaterial ist.

5. Wälzlager nach einem der Ansprüche 1 bis 3, **dadurch gekennzeichnet, dass** der Einsatz zur Temperaturkompensation ein thermoplastisches Polymermaterial ist, wie etwa Polyoxymethylen, Polyphenylensulfid, Polyetherimid oder Polyamid.

6. Wälzlager nach einem der Ansprüche 1 bis 5, **dadurch gekennzeichnet, dass** sich der Einsatz zur Temperaturkompensation (5) in einem kastenförmigen Hohlprofil befindet, das von zwei ineinander gefügten Buchsen (6, 7) gebildet wird, dessen Außenbuchse (7) einen S-förmigen Querschnitt mit im Wesentlichen radialen Schenkeln (7a, 7b) aufweist und dessen Innenbuchse (6) innen die Laufbahn eines Ringes (2) des Lagers trägt.

7. Anordnung mit einem Wälzlager nach einem der Ansprüche 1 bis 6, umfassend ein festsitzendes Gehäuse (30), eine sich drehende Welle (32), auf der jeweils zwei Vorsprünge (e) in Richtung zweier Lager (33, 34) gerichtet sind, die axial beabstandet und in Kontakt mit einer Anschlagswand (35, 36) befestigt sind, die vom Gehäuse (10) getragen wird, in dem die Innenringe (1) der Wälzlager auf die Welle (32) in Kontakt mit den Vorsprüngen (e) aufgeschrumpft sind, **dadurch gekennzeichnet, dass** der Außenring (2) eines der Lager (34) aus Blech ausgeführt ist und eine radiale Verlängerung (22) mit einer Anschlagfläche, die gegen den Einsatz zur Temperaturkompensation (5) gerichtet ist, und eine im Wesentlichen konische Tragfläche zur Befestigung des Einsatzes (5) aufweist, der sich zwischen der Anschlagfläche der radialen Verlängerung (22) und einer axialen Anschlagfläche (36), die vom Gehäuse (30) getragen wird, befindet.
